# EUROPEAN PATENT SPECIFICATION

(11) **EP 3 505 745 B1**
(45) Date of publication and mention of the grant of the patent: **17.03.2021**
(21) Application number: 18214007.9
(22) Date of filing: 19.12.2018
(51) Int. Cl.: F02D 41/02, F02D 41/14, F02D 41/18, F02D 41/22, F01N 3/10, F01N 11/00, F02M 35/10, F01N 3/021

(54) **ANOMALY DIAGNOSING APPARATUS AND METHOD FOR ADDITION VALVE**
VORRICHTUNG UND VERFAHREN ZUR DIAGNOSE VON ANOMALIEN FÜR EIN ADDITIONSVENTIL
APPAREIL DE DIAGNOSTIC D'ANOMALIES ET PROCÉDÉ POUR SOUPAPE D'AJOUT

(30) Priority: 26.12.2017 JP 2017249478
(43) Date of publication of application: 03.07.2019
(73) Proprietor: TOYOTA JIDOSHA KABUSHIKI KAISHA, Toyota-shi, Aichi-ken, 471-8571 (JP)
(72) Inventor: NEGISHI, Akiyoshi, TOYOTA-SHI, AICHI-KEN, 471-8571 (JP); OKADA, Shin, TOYOTA-SHI, AICHI-KEN, 471-8571 (JP)
(74) Representative: Cabinet Beau de Loménie

(56) References cited:
- EP-A1- 1 176 292
- EP-A1- 1 746 275
- EP-A1- 3 192 996
- EP-A2- 2 224 109
- JP-A- 2009 221 939

## Description

### BACKGROUND

The present disclosure relates to an anomaly diagnosing apparatus and an anomaly diagnosing method for an addition valve. An addition valve is arranged in the exhaust passage of an internal combustion engine and adds fuel to exhaust gas. The engine includes an air flowmeter and a catalyst. The air flowmeter is arranged in the intake passage and detects the amount of air. The catalyst is arranged in the exhaust passage and has an oxidizing function. The addition valve is located upstream of the catalyst in the exhaust passage. The engine also includes an air-fuel ratio sensor, an exhaust temperature sensor, and a fuel injection valve. The air-fuel ratio sensor is arranged downstream of the addition valve in the exhaust passage. The exhaust temperature sensor is arranged downstream of the catalyst in the exhaust passage. The fuel injection valve supplies fuel into a combustion chamber.

For example, Japanese Laid-Open Patent Publication No. 2009-221939 discloses an anomaly diagnosing apparatus for an addition valve that calculates an estimated air-fuel ratio based on a detected intake air amount, the injection amount from a fuel injection valve, and a fuel addition amount from an addition valve. The apparatus diagnoses whether there is an anomaly in the addition valve based on the difference between a value detected by the air-fuel ratio sensor and the estimated air-fuel ratio.

### SUMMARY

However, if the detected intake air amount is excessively smaller than the actual intake air amount, the above-described apparatus may erroneously determine that there is an anomaly in the addition valve even when the addition valve functions normally.

Examples of the present disclosure will now be described.
Example 1: An anomaly diagnosing apparatus for an addition valve is provided. The addition valve is arranged in an exhaust passage of an internal combustion engine and adds fuel to exhaust gas. The engine includes an air flowmeter, which is arranged in an intake passage and detects an air amount, and a catalyst, which is arranged in the exhaust passage and has an oxidizing function. The addition valve is arranged upstream of the catalyst in the exhaust passage. The engine also includes an air-fuel ratio sensor, which is arranged downstream of the addition valve in the exhaust passage, an exhaust temperature sensor, which is arranged downstream of the catalyst in the exhaust passage, and a fuel injection valve, which supplies fuel into a combustion chamber.
   The anomaly diagnosing apparatus is configured to execute:
   an air-fuel ratio estimating process of calculating an estimated air-fuel ration, which is an estimated value of an air-fuel ratio based on an intake air amount detected by the air flowmeter and the sum of a fuel amount injected by the fuel injection valve and a fuel amount added by the addition valve; and
   a stuck-closed anomaly determining process of determining that there is a stuck-closed anomaly in the addition valve if a logical conjunction is true of a condition that a detected value of the air-fuel ratio sensor is greater than the estimated air fuel-ratio by a margin greater than or equal to a specified amount and a condition that a detected value of the exhaust temperature sensor in a period in which the addition valve adds fuel is smaller than a reference value in that period by a margin greater than or equal to a predetermined amount.

   Factors that may cause the value detected by the air-fuel ratio sensor to be greater than the estimated air-fuel ratio by a margin greater than or equal to the specified amount include not only a stuck-closed anomaly of the addition valve, in which the addition valve is stuck in a closed state, but also an anomaly in which the air amount detected by the air flowmeter is excessively smaller than the actual air amount. In contrast, if there is a stuck-closed anomaly in the addition valve, the exhaust temperature is not raised by heat of reaction produced by fuel and oxygen in the catalyst due to addition of fuel by the addition valve. Therefore, in the above-described configuration, the condition for determining that there is a stuck-closed anomaly includes a condition that the value detected by the exhaust temperature sensor in the period in which the addition valve adds fuel is smaller than the reference value in that period by a margin greater than or equal to the specific amount. This reduces erroneous determination that there is an anomaly in the addition valve when the air amount detected by the air flowmeter is excessively smaller than the actual air amount.
Example 2: In the anomaly diagnosing apparatus of Example 1, the stuck-closed anomaly determining process is a process of determining that there is a stuck-closed anomaly if the logical conjunction remains true continuously for a predetermined period.
   In the above-described configuration, it is determined that there is an anomaly if the logical conjunction remains true continuously for a predetermined period. This improves the tolerance to noise of such determination, thus enhancing the accuracy of determination.
Example 3: The anomaly diagnosing apparatus of Example 1 or 2 is configured to further execute an exhaust temperature estimating process of calculating an estimated exhaust temperature, which is an estimated value of the exhaust temperature downstream of the catalyst, based on an operating point of the engine and an addition amount of fuel added by the addition valve. The apparatus is also configured to use the estimated exhaust temperature as the reference value.
   When the engine is in a transient operating state, for example, there may be a temperature difference between the upstream side and the downstream side of the catalyst. In this case, if the value obtained by adding a predetermined amount to a detected temperature upstream of the catalyst is used as the reference value, it is difficult to highly accurately determine that there is a stuck-closed anomaly based on the difference between the reference value and the exhaust temperature on the downstream side. To solve this problem, the above-described configuration employs the estimated exhaust temperature as the reference value.
Example 4: The anomaly diagnosing apparatus of Example 3 being configured to execute the stuck-closed anomaly determining process on condition that a change amount of the air-fuel ratio is smaller than or equal to a predetermined amount.
   In the above-described configuration, the stuck-closed anomaly determining process is executed when the condition is met that the change amount of the air-fuel ratio is smaller than or equal to a predetermined amount. This maximally restrains the factor of noise involved in the determination regarding anomalies.
Example 5: An anomaly diagnosing method for an addition valve is provided that executes the processes according to Examples 1 to 4.
Example 6: A non-transitory computer readable memory medium is provided that stores a program that causes a processor to execute the processes described in Examples 1 to 4.

Other aspects and advantages of the present disclosure will become apparent from the following description, taken in conjunction with the accompanying drawings, illustrating exemplary embodiments.

### BRIEF DESCRIPTION OF THE DRAWINGS

The disclosure may be understood by reference to the following description together with the accompanying drawings:
Fig. 1 is a diagram showing an anomaly diagnosing apparatus and an internal combustion engine according to one embodiment;
Fig. 2 is a block diagram showing part of processes executed by the controller in the internal combustion engine of Fig. 1;
Fig. 3 is a flowchart representing the procedure of a diagnosing process in the engine of Fig. 1; and
Fig. 4 is a timing diagram showing advantages in the engine of Fig. 1.

### DETAILED DESCRIPTION

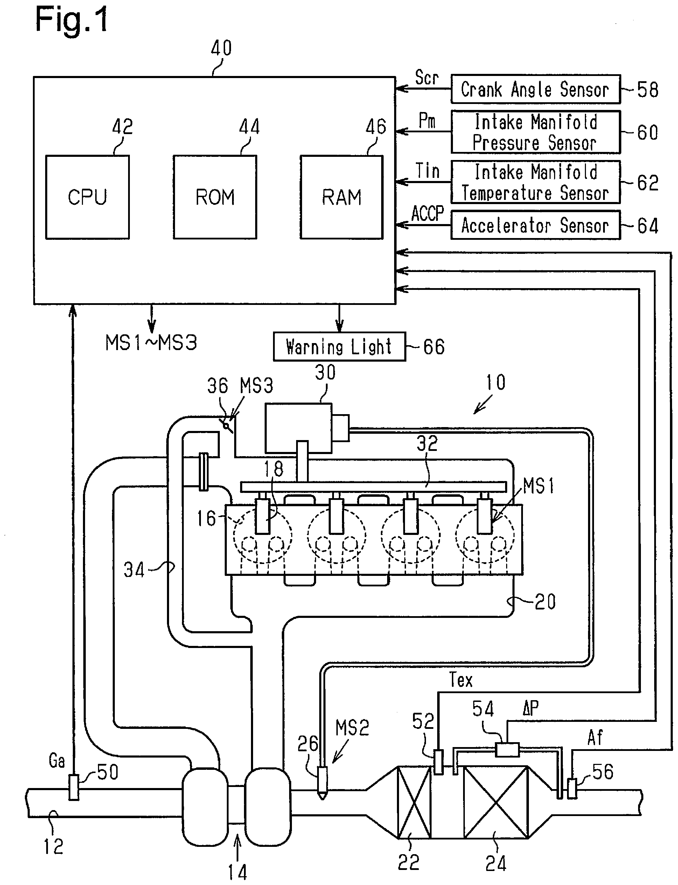

An anomaly diagnosing apparatus for an addition valve according to one embodiment will hereafter be described with reference to Figs. 1 to 4.

As shown in Fig. 1, an internal combustion engine 10 is a vehicle-mounted prime mover. The engine 10 draws air through an intake passage 12, supplying the air into combustion chambers 16 of respective cylinders through a forced induction device 14. Fuel injection valves 18 inject fuel, such as diesel oil. In each of the combustion chambers 16, the air-fuel mixture of the air drawn through the intake passage 12 and the fuel is compressed and ignited to be burned. The burned air-fuel mixture is discharged into an exhaust passage 20 as exhaust gas. In the exhaust passage 20, an oxidation catalyst 22 and a diesel particulate filter (DPF 24) are arranged downstream of a forced induction device 14 in this order sequentially from the upstream side. An addition valve 26 is arranged between the forced induction device 14 and the oxidation catalyst 22 to add fuel to the exhaust gas.

A fuel pump 30 supplies fuel to the addition valve 26 and a pressure accumulating pipe 32. The fuel injection valves 18 inject the fuel stored in the pressure accumulating pipe 32 into the combustion chambers 16. The intake passage 12 and the exhaust passage 20 are connected to each other through an EGR passage 34. An EGR valve 36 is arranged in the EGR passage 34 to regulate the communication area of the EGR passage 34.

A controller 40 controls the engine 10 and operates operated portions of the engine 10, including the fuel injection valves 18, the addition valve 26, and the EGR valve 36, to control torque and exhaust gas components, which are controlled amounts of the engine 10. To control the controlled amounts, the controller 40 refers to an intake air amount Ga, an exhaust temperature Tex between the oxidation catalyst 22 and the DPF 24, and a differential pressure ΔP between the upstream side and the downstream side of the DPF 24. The intake air amount Ga is detected by an air flowmeter 50 provided in the intake passage 12. The exhaust temperature Tex is detected by an exhaust temperature sensor 52. The differential pressure ΔP is detected by a differential pressure sensor 54. The controller 40 also refers to an air-fuel ratio Af detected by an air-fuel ratio sensor 56, an output signal Scr from a crank angle sensor 58, and an intake manifold pressure Pm detected by an intake manifold pressure sensor 60. The air-fuel ratio sensor 56 is arranged downstream of the DPF 24. The intake manifold pressure Pm is the pressure in a section of the intake passage 12 downstream of the forced induction device 14. The controller 40 further refers to an intake manifold temperature Tin detected by an intake manifold temperature sensor 62 and an accelerator operation amount ACCP. The intake manifold temperature Tin is the temperature in a section of the intake passage 12 downstream of the forced induction device 14. The accelerator operation amount ACCP is the depression amount of the accelerator pedal and detected by an accelerator sensor 64.

The controller 40 includes a CPU 42, a ROM 44, and a RAM 46 and controls the aforementioned controlled amounts by executing programs memorized in the ROM 44 by means of the CPU 42.

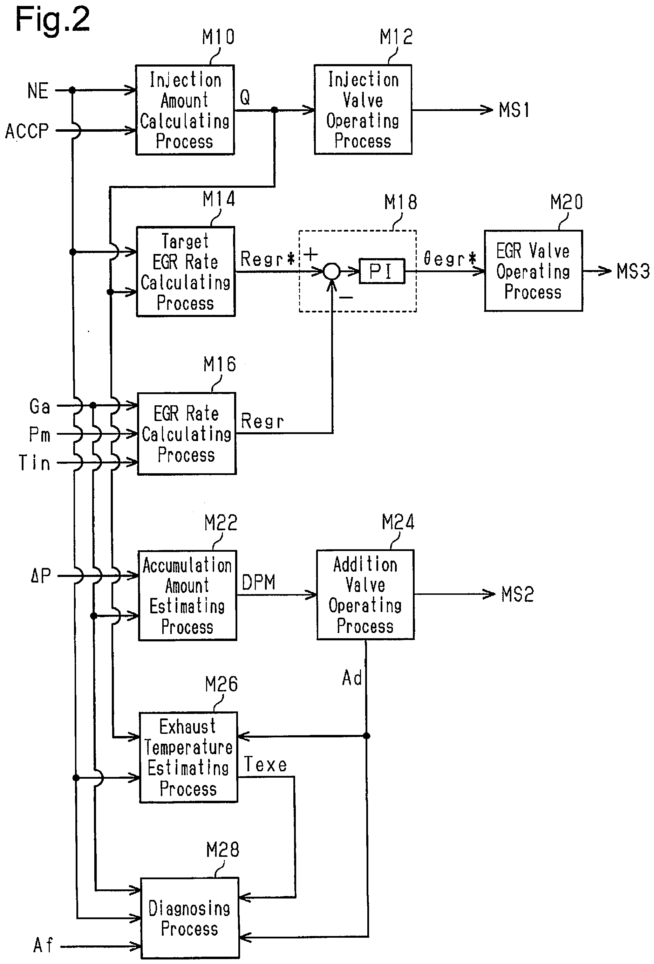

Fig. 2 shows part of processes executed by the controller 40. The processes illustrated in Fig. 2 are implemented by executing programs memorized in the ROM 44 by means of the CPU 42.

An injection amount calculating process M10 is a process of calculating an injection amount Q injected by each fuel injection valve 18 based on the rotation speed NE and the accelerator operation amount ACCP. An injection valve operating process M12 is a process of outputting an operating signal MS1 to each fuel injection valve 18 to operate the fuel injection valve 18 such that the injection amount injected by the fuel injection valve 18 becomes equal to the injection amount Q.

A target EGR rate calculating process M14 is a process of calculating a target EGR rate Regr* as the target of an EGR rate Regr based on the rotation speed NE and the injection amount Q. The EGR rate Regr is a value obtained by dividing the amount of the exhaust gas flowing from the exhaust passage 20 into the intake passage 12 through the EGR passage 34 by the intake air amount Ga. An EGR rate calculating process M16 is a process of calculating the EGR rate Regr based on the intake air amount Ga, the intake manifold pressure Pm, and the intake manifold temperature Tin. A feedback process M18 is a process of calculating a command value θegr* for the opening degree of the EGR valve 36 as an operation amount for feedback-controlling the EGR rate Regr to the target EGR rate Regr*. An EGR valve operating process M20 is a process of outputting an operating signal MS3 to the EGR valve 36 to operate the EGR valve 36 such that the opening degree θegr of the EGR valve 36 becomes equal to the command value θegr*.

An accumulation amount estimating process M22 is a process of calculating an accumulation amount DPM, which is the amount of particulate matter trapped by the DPF 24, based on the differential pressure ΔP and the intake air amount Ga. An addition valve operating process M24 is a process of outputting an operating signal MS2 to the addition valve 26 to operate the addition valve 26 to add fuel to exhaust gas when the accumulation amount DPM becomes greater than or equal to a predetermined amount, as a PM regenerating process for removing the particulate matter that has been trapped by the DPF 24.

An exhaust temperature estimating process M26 is a process of calculating an estimated exhaust temperature Texe based on the rotation speed NE and the injection amount Q, which define the operating point of the engine. During the PM regenerating process, the exhaust temperature estimating process M26 calculates the estimated exhaust temperature Texe with the addition amount Ad of the fuel added by the addition valve 26 taken into condition. This allows the estimated exhaust temperature Texe to represent an estimated exhaust temperature between the oxidation catalyst 22 and the DPF 24. Specifically, the exhaust temperature estimating process M26 calculates a greater estimated exhaust temperature Texe when the injection amount Q is great than when the injection amount Q is small. The exhaust temperature estimating process M26 also calculates a greater estimated exhaust temperature Texe when the addition amount Ad is great than when the addition amount Ad is small.

More specifically, the exhaust temperature estimating process M26 includes a process of setting a base temperature based on the operating point of the engine 10, a process of correcting the base temperature using an increase correction amount determined based on the addition amount Ad, and a process of causing the estimated exhaust temperature Texe to converge to the corrected base temperature. Specifically, map data having the rotation speed NE and the injection amount Q as input variables and the base temperature as an output variable is stored in the ROM 44, and the CPU 42 performs map calculation to obtain the base temperature. The map data refers to a data set of discrete values of the input variable and values of the output variable each corresponding to a value of the input variable. When the value of an input variable matches any of the values of the input variable on the map data, the map calculation uses the value of the corresponding output variable on the map data as the calculation result. When the value of the input variable does not match any of the values of the input variable on the map data, the map calculation uses a value obtained by interpolation of multiple values of the output variable included in the map data set as the calculation result. The process of causing the corrected base temperature to converge to the estimated exhaust temperature Texe is a process of updating the estimated exhaust temperature Texe using, for example, an exponential moving average of a current estimated exhaust temperature Texe and a corrected base temperature.

A diagnosing process M28 is a process of diagnosing whether there is an anomaly in the addition valve 26 based on the rotation speed NE, the intake air amount Ga, the air-fuel ratio Af, the estimated exhaust temperature Texe, and the addition amount Ad.

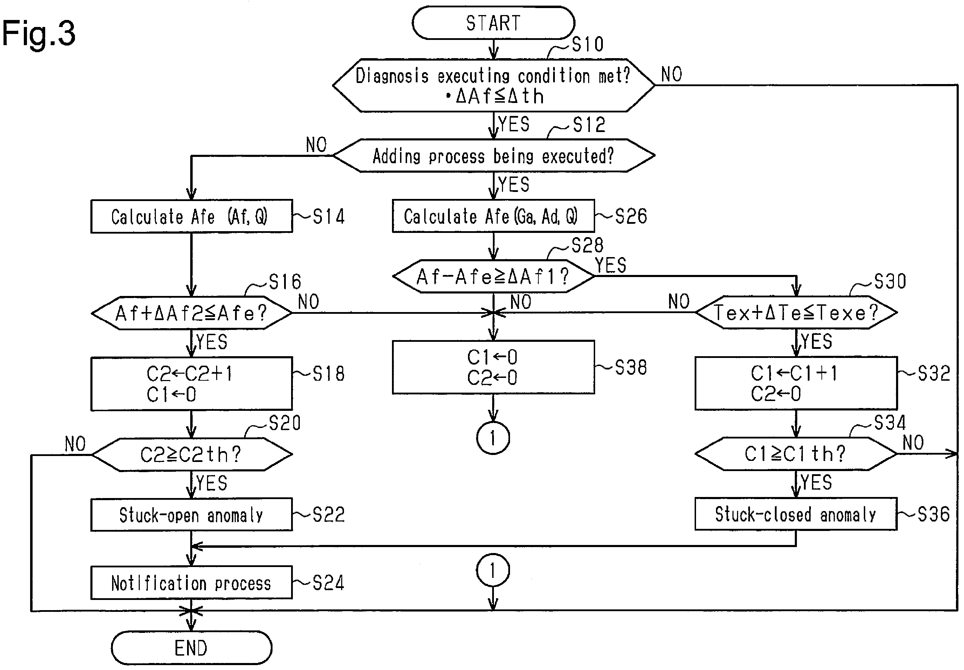

Fig. 3 shows the procedure of the diagnosing process M28. The process of Fig. 3 is implemented by executing a program memorized in the ROM 44 by means of the CPU 42 repeatedly, for example, at predetermined cycles. In the following description, the number of each step is represented by the letter S followed by a numeral.

In the series of processes shown in Fig. 3, the CPU 42 first determines whether a diagnosis executing condition for an anomaly in the addition valve 26 is met (S10). Specifically, the diagnosis executing condition includes, for example, a condition that a change amount ΔAf of the air-fuel ratio Af is smaller than or equal to a predetermined amount Δth. The change amount ΔAf is an amount calculated by the CPU 42 based on time-series data representing the air-fuel ratio Af and also the change amount of the air-fuel ratio Af per unit time. The change amount may be, for example, the value obtained by subtracting the air-fuel ratio Af that has been obtained in the previous control cycle from the air-fuel ratio Af obtained in the current control cycle. Specifically, the air-fuel ratio Af may change when the EGR rate Regr changes, the intake air amount Ga changes due to the change of the EGR rate Regr, or the injection amount Q changes.

If the CPU 42 determines that the diagnosis executing condition is met (S10: YES), the CPU 42 determines whether an adding process of fuel to exhaust gas by the addition valve 26 is being executed (S12). This process is a process of determining whether the PM regenerating process is being executed. If the CPU 42 determines that the adding process is not being executed (S12: NO), the CPU 42 calculates an estimated air-fuel ratio Afe based on the air-fuel ratio Af and the injection amount Q (S14). Specifically, the CPU 42 calculates a greater estimated air-fuel ratio Afe when the intake air amount Ga is great than when the intake air amount Ga is small. Also, the CPU 42 calculates a smaller estimated air-fuel ratio Afe when the injection amount Q is great than when the injection amount Q is small. For example, this process is accomplished by substituting, for the estimated air-fuel ratio Afe, the value obtained by dividing the integrated value of the intake air amount Ga in a predetermined period by the integrated value of the injection amount Q in the predetermined period by means of the CPU 42.

Subsequently, the CPU 42 determines whether the air-fuel ratio Af is smaller than the estimated air-fuel ratio Afe by a margin greater than or equal to a specified amount ΔAf2 (S16). This process is a process of determining whether there is a stuck-open anomaly. A stuck-open anomaly is an anomaly in which the addition valve 26 is constantly held open without being operated using an operating signal MS2. In other words, if there is a stuck-open anomaly in the addition valve 26, the exhaust components sensed by the air-fuel ratio sensor 56 are influenced by the fuel that has flowed from the addition valve 26 into the exhaust gas. However, the estimated air-fuel ratio Afe is calculated without considering the fuel that has flowed from the addition valve 26 into the exhaust gas and thus becomes greater than the air-fuel ratio Af. Therefore, the specified amount ΔAf2 is set to a value greater than the maximum amount by which the air-fuel ratio Af becomes smaller than the estimated air-fuel ratio Afe due to an error in calculation of the estimated air-fuel ratio Afe. As a result, when the air-fuel ratio Af is smaller than the estimated air-fuel ratio Afe by a margin greater than or equal to the specified amount ΔAf2, it is determined that the fuel is likely to be flowing from the addition valve 26 into the exhaust gas.

If the CPU 42 determines that the air-fuel ratio Af is smaller than the estimated air-fuel ratio Afe by a margin greater than or equal to the specified amount ΔAf2 (S16: YES), the CPU 42 increments the stuck-open anomaly counter C2 and initializes a stuck-closed anomaly counter C1 (S18). Then, the CPU 42 determines whether the stuck-open anomaly counter C2 is greater than or equal to a predetermined value C2th (S20). If the CPU 42 determines that the stuck-open anomaly counter C2 is greater than or equal to the predetermined value C2th (S20: YES), the CPU 42 determines that a stuck-open anomaly has occurred in the addition valve 26 (S22). Also, the CPU 42 operates a warning light 66, as shown in Fig. 1, to execute a notification process of urging the user of the vehicle to order repair service (S24).

In contrast, if the CPU 42 determines that the adding process is being executed (S12: YES), the CPU 42 calculates the estimated air-fuel ratio Afe based on the intake air amount Ga, the addition amount Ad, and the injection amount Q (S26). Specifically, the CPU 42 calculates a greater estimated air-fuel ratio Afe when the intake air amount Ga is great than when the intake air amount Ga is small. On the other hand, the CPU 42 calculates a smaller estimated air-fuel ratio Afe when the injection amount Q is great than when the injection amount Q is small. The CPU 42 also calculates a smaller estimated air-fuel ratio Afe when the addition amount Ad is great than when the addition amount Ad is small. For example, this process is accomplished by substituting, for the estimated air-fuel ratio Afe, the value obtained by dividing the integrated value of the intake air amount Ga in a predetermined period by the integrated value of the sum of the injection amount Q and the addition amount Ad in the predetermined period by means of the CPU 42.

Next, the CPU 42 determines whether the air-fuel ratio Af exceeds the estimated air-fuel ratio Afe calculated in S26 by a margin greater than or equal to a specified amount ΔAf1 (S28). This process determines whether there is a possibility of a stuck-closed anomaly in the addition valve 26. A stuck-closed anomaly is an anomaly in which, despite the fact that the addition valve 26 is operated to add fuel to exhaust gas, the addition valve 26 actually does not inject fuel and thus cannot add fuel to exhaust gas. The fuel (the addition amount Ad) to be added to the exhaust gas by the addition valve 26 through operation of the addition valve 26 is considered in calculation of the estimated air-fuel ratio Afe. As a result, if there is a stuck-closed anomaly in the addition valve 26, the estimated air-fuel ratio Afe is smaller than the air-fuel ratio Af. Therefore, the specified amount ΔAf1 is set to a value greater than the maximum amount by which the air-fuel ratio Af exceeds the estimated air-fuel ratio Afe due to an error in calculation of the estimated air-fuel ratio Afe. This allows for determination that there is a possibility of a stuck-closed anomaly, in which the addition valve 26 cannot add fuel to exhaust gas, in the addition valve 26 when the air-fuel ratio Af is greater than the estimated air-fuel ratio Afe by a margin greater than or equal to the specified amount ΔAf1.

If the CPU 42 determines that the air-fuel ratio Af exceeds the estimated air-fuel ratio Afe by a margin greater than or equal to the specified amount ΔAf1 (S28: YES), the CPU 42 determines whether the exhaust temperature Tex is smaller than the estimated exhaust temperature Texe by a margin greater than or equal to a predetermined amount ΔTe (S30). This process is carried out to ascertain that the factor that has brought about a positive determination in S28 is not an anomaly in which the intake air amount Ga detected by the air flowmeter 50 is excessively smaller than the actual intake air amount. In other words, at the time of a stuck-closed anomaly of the addition valve 26, the adding process cannot add the addition amount Ad of fuel to the exhaust gas. The exhaust temperature downstream of the oxidation catalyst 22 is thus lower than that in a case in which the addition amount Ad of fuel is added to the exhaust gas. Specifically, when the adding process is being executed, the estimated exhaust temperature Texe is determined with an expected rise of the exhaust temperature downstream of the oxidation catalyst 22 caused by the adding process taken into consideration. Therefore, at the time of a stuck-closed anomaly, the exhaust temperature Tex is smaller than the estimated exhaust temperature Texe to a great extent. In contrast, if the intake air amount Ga is excessively smaller than the actual air amount despite the fact that there is no stuck-closed anomaly, the exhaust temperature Tex is expected to be a value approximating the estimated exhaust temperature Texe. Therefore, the predetermined value ΔTe is set to a value greater than the maximum amount by which the exhaust temperature Tex is smaller than the estimated exhaust temperature Texe due to an error in calculation of the estimated exhaust temperature Texe. This allows for determination that there is a stuck-closed anomaly when the exhaust temperature Tex is smaller than the estimated exhaust temperature Texe by a margin greater than or equal to the predetermined amount ΔTe.

If the CPU 42 determines that the exhaust temperature Tex is smaller than the estimated exhaust temperature Texe by a margin greater than or equal to the predetermined amount ΔTe (S30: YES), the CPU 42 increments the stuck-closed anomaly counter C1 and initializes the stuck-open anomaly counter C2 (S32). Next, the CPU 42 determines whether the stuck-closed anomaly counter C1 is greater than or equal to a predetermined value C1th (S34). If the CPU 42 determines that the stuck-closed anomaly counter C1 is greater than or equal to the predetermined value C1th (S34: YES), the CPU 42 determines that there is a stuck-closed anomaly in the addition valve 26 (S36) and performs S24.

If the CPU 42 makes a negative determination in S16, S28, or S30, the CPU 42 initializes the stuck-closed anomaly counter C1 and the stuck-open anomaly counter C2 (S38).

The CPU 42 suspends the series of processes shown in Fig. 3 when S24 or S38 is completed or if a negative determination is made in S10, S20, or S34.

An operation and advantages of the present embodiment will now be described.

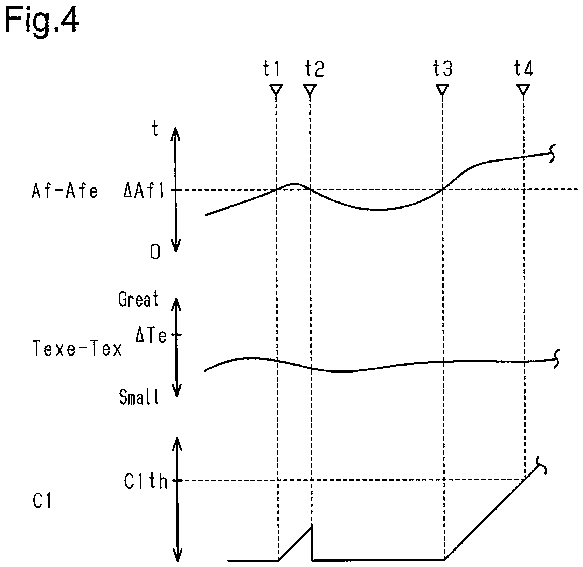

Fig. 4 shows changes in the value obtained by subtracting the estimated air-fuel ratio Afe from the air-fuel ratio Af, the value obtained by subtracting the exhaust temperature Tex from the estimated exhaust temperature Texe, and the stuck-closed anomaly counter C1.

At a point in time t1, the air-fuel ratio Af exceeds the estimated air-fuel ratio Afe by a margin greater than or equal to the specified amount ΔAf1. Also, the difference between the estimated exhaust temperature Texe and the exhaust temperature Tex is relatively small. Therefore, the CPU 42 starts to increment the stuck-closed anomaly counter C1. However, at a point in time t2, the amount by which the air-fuel ratio Af exceeds the estimated air-fuel ratio Afe becomes smaller than the specified amount ΔAf1. This causes the CPU 42 to initialize the stuck-closed anomaly counter C1. Then, at a point in time t3, the air-fuel ratio Af exceeds the estimated air-fuel ratio Afe by a margin greater than or equal to the specified amount ΔAf1. Also, the difference between the estimated exhaust temperature Texe and the exhaust temperature Tex is relatively small. This causes the CPU 42 to restart incrementing the stuck-closed anomaly counter C1. At a pint in time t4, when the stuck-closed anomaly counter C1 becomes greater than or equal to the predetermined value C1th, the CPU 42 determines that there is a stuck-closed anomaly in the addition valve 26. Specifically, Fig. 4 illustrates a case in which the intake air amount Ga detected by the air flowmeter 50 is normal. In a case in which the intake air amount Ga is excessively smaller than the actual air amount and there is no stuck-closed anomaly, the exhaust temperature Tex does not become smaller than the estimated exhaust temperature Texe by a margin greater than or equal to the predetermined amount ΔTe. The stuck-closed anomaly counter C1 is thus maintained without being incremented.

As has been described, in the present embodiment, it is determined that there is a stuck-closed anomaly when the air-fuel ratio Af exceeds the estimated air-fuel ratio Afe by a margin greater than or equal to the specified amount ΔAf1 and, at the same time, the difference between the estimated exhaust temperature Texe and the exhaust temperature Tex is great. This restrains erroneously determination that there is a stuck-closed anomaly in the addition valve 26 due to the fact that the intake air amount Ga detected by the air flowmeter 50 is excessively smaller than the actual intake air amount.

The present embodiment described above further has the following advantages.
(1) When the engine 10 is in transient operation, for example, there may be a temperature difference between the upstream side and the downstream side of the oxidation catalyst 22. Therefore, for example, if the value obtained by adding a predetermined amount to a detected temperature upstream of the oxidation catalyst 22 is used instead of the estimated exhaust temperature Texe, it may become difficult to accurately determine that there is no stuck-closed anomaly. To solve this problem, the present embodiment employs the estimated exhaust temperature Texe to ascertain that the fact that the air-fuel ratio Af has become great is caused not by a stuck-closed anomaly but by an anomaly in which the intake air amount Ga detected by the air flowmeter 50 is excessively smaller than the actual air amount.
(2) The diagnosis executing condition includes the condition that the change amount ΔAf of the air-fuel ratio Af is smaller than or equal to the predetermined amount Δth. This maximally restrains a factor of noise involved in anomaly determination.

### <Correspondence>

The correspondence between the items in the above-described embodiments and the items described in the above SUMMARY is as follows. Below, the correspondence is shown for each of the numbers in the examples described in the above SUMMARY.
[1] The "catalyst" corresponds to the oxidation catalyst 22. The "anomaly diagnosing apparatus" corresponds to the controller 40. The "air-fuel ratio estimating process" corresponds to S26. The "stuck-closed anomaly determining process" corresponds to S28 to S36. The "reference value" corresponds to the estimated exhaust temperature Texe.
[2] The "predetermined period" corresponds to a period that lasts for a length corresponding to the value obtained by multiplying the control cycle of the process of Fig. 3 by the predetermined value C1th.
[4] Example 4 corresponds to the fact that the diagnosis executing condition in S10 includes the condition that the change amount ΔAf of the air-fuel ratio Af is smaller than or equal to the predetermined amount Δth.

### <Other Embodiments>

The above-described embodiments may be modified as follows. The above-described embodiments and the following modifications can be combined as long as the combined modifications remain technically consistent with each other.

### Regarding Exhaust Temperature Estimating Process

In the above-described embodiments, the estimated exhaust temperature Texe is calculated based on the rotation speed NE and the injection amount Q, which define the operating point of the internal combustion engine 10. However, the configuration is not restricted to this. For example, the accelerator operation amount ACCP may be used instead of the injection amount Q as load. Alternatively, for example, the estimated exhaust temperature Texe may be calculated based on the air-fuel ratio Af in addition to the rotation speed NE, the load, and the addition amount Ad. Such calculation is implemented by, for example, a process of correcting the base temperature, which is determined in correspondence with the rotation speed NE and the load, by the increase correction amount, and an air-fuel ratio correction amount determined in correspondence with the air-fuel ratio and then causing the estimated exhaust temperature Texe to converge to the corrected base temperature. Specifically, the air-fuel ratio correction amount may be map-calculated by the CPU 42 with reference to map data in which the air-fuel ratio is an input variable and the air-fuel ratio correction amount is an output variable. The map data is memorized in the ROM 44 in advance.

The process of causing the estimated exhaust temperature Texe to converge to the base temperature, which is determined in correspondence with the operating point, is not restricted to the exponential moving average process. The process may be, for example, a process of setting an output value of a low-pass filter, such as a first-order lag filter or a second-order lag filter, in which the base temperature is an input may be set as the estimated exhaust temperature Texe.

### Regarding Diagnosis Executing Condition

In the present embodiment, the diagnosis executing condition for the stuck-open anomaly determining process includes the condition that the adding process is in an interrupted state. However, the present configuration is not restricted to this.

Also, it is not always necessary to set the change amount ΔAf of the air-fuel ratio Af being smaller than the predetermined amount Δth as a condition.

### Regarding Air-Fuel Ratio Estimating Process

If the adding process being not executed is excluded from the diagnosis executing condition for the stuck-open anomaly determining process as has been described in "Regarding Diagnosis Executing Condition," for example, the estimated air-fuel ratio Afe calculated in S26 may be used in S16.

### Regarding Reference Value

In the present embodiment, the estimated exhaust temperature Texe is set as the "reference value" when the adding process is being executed. However, the configuration is not restricted to this. For example, a sensor may be provided to detect an upstream exhaust temperature that is the exhaust temperature upstream of the oxidation catalyst 22. In this case, the value obtained by adding a predetermined amount to a detected upstream exhaust temperature may be set as the "reference value". Alternatively, instead of the detected upstream exhaust temperature, an estimated upstream exhaust temperature based on the operating point of the engine 10 may be used to calculate the "reference value".

### Regarding Stuck-Closed Anomaly Determining Process

In the illustrated embodiment, it is determined that there is a stuck-closed anomaly if the logical conjunction remains true continuously for a predetermined period of the condition that the air-fuel ratio Af is greater than the estimated air fuel-ratio Afe by a margin greater than or equal to the specified amount ΔAf1 and the condition that the exhaust temperature Tex is smaller than the estimated exhaust temperature Texe by a margin greater than or equal to the predetermined amount ΔTe. However, the configuration is not restricted to this. For example, it may be determined that there is a stuck-closed anomaly if the above-described logical conjunction remains true for a predetermined accumulated time or longer in a specified period. Alternatively, for example, it may be determined that there is a stuck-closed anomaly immediately after the logical conjunction becomes true.

### Regarding Stuck-Open Anomaly Determining Process

As has been described in "Regarding Diagnosis Executing Condition," for example, the diagnosis executing condition for the stuck-open anomaly determining process may exclude the condition that the adding process is not being executed. In this case, as has been described in "Regarding Air-Fuel Ratio Estimating Process," the stuck-open anomaly determining process may be carried out by using, in S16, the estimated air-fuel ratio Afe calculated in S26. In other words, if the addition amount caused by a stuck-open anomaly is greater than the addition amount brought about by the adding process, a positive determination is made in S16. This allows for detection of a stuck-open anomaly. Specifically, in this case, the specified amount ΔAf2 may be set to a value greater than the maximum absolute value of the difference between the air-fuel ratio Af and the estimated air-fuel ratio Afe when the addition amount Ad of fuel is added.

### Regarding Adding Process

The adding process is not restricted to the PM regenerating process. For example, even when the accumulation amount DPM is small, the adding process may be executed exclusively for the stuck-closed anomaly diagnosis.

### Regarding Notification Process

In the above-described embodiments, the process of operating a device that outputs visual information (the warning light 66) is used, by way of example, as the notification process of issuing a notification about the existence of an anomaly. However, the invention is not restricted to this. For example, the notification process may be a process of operating a device that outputs auditory information, such as warning sound. In other words, any suitable notifying device may be employed as long as the notifying device outputs at least either auditory or visual information.

### Regarding Exhaust System

In the above-described embodiments, the addition valve 26 is provided upstream of the oxidation catalyst 22, while the exhaust temperature sensor 52 and the air-fuel ratio sensor 56 are provided downstream of the oxidation catalyst 22. However, the invention is not restricted to this. For example, the oxidation catalyst 22 may be omitted and replaced by an oxidation catalyst arranged in the DPF 24. In this configuration, the addition valve 26 may be provided upstream of the DPF 24 while the exhaust temperature sensor 52 and the air-fuel ratio sensor 56 may be provided downstream of the DPF 24. Also, for example, the air-fuel ratio sensor 56 may be arranged between the addition valve 26 and the oxidation catalyst 22.

### Regarding Anomaly Diagnosing Apparatus

The anomaly diagnosing apparatus is not limited to an apparatus that includes the CPU 42 and the ROM 44 and executes software processing. For example, at least part of the processes executed by the software in the above-described embodiment may be executed by hardware circuits dedicated to execution of these processes (such as ASIC). That is, the anomaly diagnosing apparatus may be modified as long as it has any one of the following configurations (a) to (c). (a) A configuration including a processor that executes all of the above-described processes according to programs and a program storage device such as a ROM (including a non-transitory computer readable medium) that stores the programs. (b) A configuration including a processor and a program storage device that execute part of the above-described processes according to the programs and a dedicated hardware circuit that executes the remaining processes. (c) A configuration including a dedicated hardware circuit that executes all of the above-described processes. A plurality of software processing circuits each including a processor and a program storage device and a plurality of dedicated hardware circuits may be provided. That is, the above processes may be executed in any manner as long as the processes are executed by processing circuitry that includes at least one of a set of one or more software processing circuits and a set of one or more dedicated hardware circuits.

### Other Embodiments

The internal combustion engine is not limited to a four-cylinder engine. For example, an in-line six-cylinder engine may be used. Not according to the invention, the stuck-open anomaly determining process does not necessarily have to be executed based on the comparison between the estimated air-fuel ratio Afe and the air-fuel ratio Af.

## Claims

1. An anomaly diagnosing apparatus (40) for an addition valve (26), wherein
the addition valve (26) is arranged in an exhaust passage (20) of an internal combustion engine (10) and is configured to add fuel to exhaust gas,
the engine (10) includes an air flowmeter (50), which is arranged in an intake passage (12) and configured to detect an air amount (Ga), and
a catalyst (22), which is arranged in the exhaust passage (20) and has an oxidizing function, wherein,
the addition valve (26) is arranged upstream of the catalyst (22) in the exhaust passage (20),
the engine (10) also includes an air-fuel ratio sensor (56), which is arranged downstream of the addition valve (26) in the exhaust passage (20), an exhaust temperature sensor (52), which is arranged downstream of the catalyst (22) in the exhaust passage (20),
and a fuel injection valve (18), which is configured to supply fuel into a combustion chamber (16), and
the anomaly diagnosing apparatus (40) comprising processing means configured to execute:
an air-fuel ratio estimating process of calculating an estimated air-fuel ratio (Afe), which is an estimated value of an air-fuel ratio (Af) based on an intake air amount (Ga) detected by the air flowmeter (50) and the sum of a fuel amount (Q) injected by the fuel injection valve (18) and a fuel amount (Ad) added by the addition valve (26); and **characterized by**
a stuck-closed anomaly determining process of determining that there is a stuck-closed anomaly in the addition valve (26) if a logical conjunction is true of a condition that a detected value (Af) of the air-fuel ratio sensor (56) is greater than the estimated air fuel-ratio (Afe) by a margin greater than or equal to a specified amount (ΔAf1) and a condition that a detected value (Tex) of the exhaust temperature sensor (52) in a period in which the addition valve (26) adds fuel is smaller than a reference value (Texe) in that period by a margin greater than or equal to a predetermined amount (ΔTe).

2. The anomaly diagnosing apparatus (40) for an addition valve (26) according to claim 1, **characterized in that** the stuck-closed anomaly determining process is a process of determining that there is a stuck-closed anomaly if the logical conjunction remains true continuously for a predetermined period (C1th).

3. The anomaly diagnosing apparatus (40) for an addition valve (26) according to claim 1 or 2, wherein the processing means is configured to
further execute an exhaust temperature estimating process of calculating an estimated exhaust temperature (Texe), which is an estimated value of the exhaust temperature downstream of the catalyst (22), based on an operating point of the engine (10) and an addition amount (Ad) of fuel added by the addition valve (26), and
use the estimated exhaust temperature (Texe) as the reference value (Texe).

4. The anomaly diagnosing apparatus (40) for an addition valve (26) according to claim 3, wherein the processing means is configured to execute the stuck-closed anomaly determining process if a change amount (ΔAf) of the air-fuel ratio (Af) is smaller than or equal to a predetermined amount (Δth).

5. An anomaly diagnosing method for an addition valve (26), wherein
the addition valve (26) is arranged in an exhaust passage (20) of an internal combustion engine (10) and adds fuel to exhaust gas,
the engine (10) includes an air flowmeter (50), which is arranged in an intake passage (12) and detects an air amount (Ga), and a catalyst (22), which is arranged in the exhaust passage (20) and has an oxidizing function,
the addition valve (26) is arranged upstream of the catalyst (22) in the exhaust passage (20), and
the engine (10) also includes an air-fuel ratio sensor (56), which is arranged downstream of the addition valve (26) in the exhaust passage (20), an exhaust temperature sensor (52), which is arranged downstream of the catalyst (22) in the exhaust passage (20), and a fuel injection valve (18), which supplies fuel into a combustion chamber (16),
the anomaly diagnosing method being **characterized by** comprising:
calculating an estimated air-fuel ratio (Afe), which is an estimated value of an air-fuel ratio (Af) based on an intake air amount (Ga) detected by the air flowmeter (50) and the sum of a fuel amount (Q) injected by the fuel injection valve (18) and a fuel amount (Ad) added by the addition valve (26); and
determining that there is a stuck-closed anomaly in the addition valve (26) if a logical conjunction is true of a condition that a detected value (Af) of the air-fuel ratio sensor (56) is greater than the estimated air fuel-ratio (Afe) by a margin greater than or equal to a specified amount (ΔAf1) and a condition that a detected value (Tex) of the exhaust temperature sensor (52) in a period in which the addition valve (26) adds fuel is smaller than a reference value (Texe) in that period by a margin greater than or equal to a predetermined amount (ΔTe).

6. A non-transitory computer readable memory medium storing a program that causes a processor to perform an anomaly diagnosing process for an addition valve (26), wherein
the addition valve (26) is arranged in an exhaust passage (20) of an internal combustion engine (10) and adds fuel to exhaust gas,
the engine (10) includes an air flowmeter (50), which is arranged in an intake passage (12) and detects an air amount (Ga), and a catalyst (22), which is arranged in the exhaust passage (20) and has an oxidizing function,
the addition valve (26) is arranged upstream of the catalyst (22) in the exhaust passage (20),
the engine (10) also includes an air-fuel ratio sensor (56), which is arranged downstream of the addition valve (26) in the exhaust passage (20), an exhaust temperature sensor (52), which is arranged downstream of the catalyst (22) in the exhaust passage (20), and a fuel injection valve (18), which supplies fuel into a combustion chamber (16), and
the anomaly diagnosing process being **characterized by** including
calculating an estimated air-fuel ratio (Afe), which is an estimated value of an air-fuel ratio (Af) based on an intake air amount (Ga) detected by the air flowmeter (50) and the sum of a fuel amount (Q) injected by the fuel injection valve (18) and a fuel amount (Ad) added by the addition valve (26), and
determining that there is a stuck-closed anomaly in the addition valve (26) if a logical conjunction is true of a condition that a detected value (Af) of the air-fuel ratio sensor (56) is greater than the estimated air fuel-ratio (Afe) by a margin greater than or equal to a specified amount (ΔAf1) and a condition that a detected value (Tex) of the exhaust temperature sensor (52) in a period in which the addition valve (26) adds fuel is smaller than a reference value (Texe) in that period by a margin greater than or equal to a predetermined amount (ΔTe).

## Patentansprüche

1. Anomalie-Diagnosevorrichtung (40) für ein Additionsventil (26), wobei
das Additionsventil (26) in einem Auslasskanal (20) eines Verbrennungsmotors (10) angeordnet und so konfiguriert ist, dass es dem Abgas Kraftstoff hinzufügt,
der Motor (10) einen Luftdurchflussmesser (50), der in einem Einlasskanal (12) angeordnet und so konfiguriert ist, dass er eine Luftmenge (Ga) erfasst, und einen Katalysator (22), der in dem Abgaskanal (20) angeordnet ist und eine oxidierende Funktion hat, aufweist, wobei
das Additionsventil (26) stromaufwärts des Katalysators (22) in dem Abgaskanal (20) angeordnet ist,
der Motor (10) ferner einen Luft-Kraftstoff-Verhältnissensor (56), der stromabwärts des Additionsventils (26) in dem Auslasskanal (20) angeordnet ist, einen Abgastemperatursensor (52), der stromabwärts des Katalysators (22) in dem Auslasskanal (20) angeordnet ist, und ein Kraftstoffeinspritzventil (18) umfasst, das dazu konfiguriert ist, Kraftstoff in eine Brennkammer (16) zuzuführen, und
die Anomalie-Diagnosevorrichtung (40) Verarbeitungsmittel umfasst, die dazu konfiguriert sind, auszuführen:
ein Luft-Kraftstoff-Verhältnis-Schätzverfahren zum Berechnen eines geschätzten Luft-Kraftstoff-Verhältnisses (Afe), das ein geschätzter Wert eines Luft-Kraftstoff-Verhältnisses (Af) auf der Grundlage einer von dem Luftdurchflussmesser (50) erfassten Ansaugluftmenge (Ga) und der Summe einer von dem Kraftstoffeinspritzventil (18) eingespritzten Kraftstoffmenge (Q) und einer von dem Additionsventil (26) hinzugefügten Kraftstoffmenge (Ad) ist, und
**gekennzeichnet durch**
ein Geschlossen-festsitzend-Anomalie-Bestimmungsverfahren, zum Bestimmen, dass es eine Geschlossen-festsitzend-Anomalie in dem Additionsventil (26) gibt, wenn eine logische Verknüpfung für eine Bedingung, dass ein erfasster Wert (Af) des Luft-Kraftstoff-Verhältnis-Sensors (56) um eine Spanne, die größer oder gleich einem bestimmten Betrag (ΔAf1) ist, größer ist als der geschätzte Luft-Kraftstoff-Verhältnis (Afe), und eine Bedingung, dass ein erfasster Wert (Tex) des Abgastemperatursensors (52) in einem Zeitraum, in dem das Additionsventil (26) Kraftstoff hinzufügt, um eine Spanne, die größer oder gleich einem vorbestimmten Betrag ist (ΔTe), kleiner als ein Referenzwert (Texe) in diesem Zeitraum ist, zutrifft.

2. Anomalie-Diagnosevorrichtung (40) für ein Additionsventil (26) nach Anspruch 1, **dadurch gekennzeichnet, dass** das Verfahren zur Bestimmung einer Geschlossen-festsitzend-Anomalie ein Verfahren ist, bei dem bestimmt wird, dass eine Geschlossen-festsitzend-Anomalie vorliegt, wenn die logische Verknüpfung kontinuierlich für einen vorbestimmte Zeitraum (C1th) wahr bleibt.

3. Anomalie-Diagnosevorrichtung (40) für ein Additionsventil (26) nach Anspruch 1 oder 2, wobei das Verarbeitungsmittel dazu konfiguriert ist,
ferner ein Abgastemperatur-Schätzverfahren zum Berechnen einer geschätzten Abgastemperatur (Texe) auszuführen, die ein geschätzter Wert der Abgastemperatur stromabwärts des Katalysators (22) ist, basierend auf einem Betriebspunkt des Motors (10) und einer Zugabemenge (Ad) von durch das Additionsventil (26) zugeführtem Kraftstoff, und
die geschätzte Abgastemperatur (Texe) als Referenzwert (Texe) zu verwenden.

4. Anomalie-Diagnosevorrichtung (40) für ein Additionsventil (26) nach Anspruch 3, wobei das Verarbeitungsmittel dazu konfiguriert ist, das Geschlossen-festsitzend-Anomalie-Bestimmungsverfahren auszuführen, wenn ein Änderungsbetrag (ΔAf) des Luft-Kraftstoff-Verhältnisses (Af) kleiner oder gleich einem vorbestimmten Betrag (Δth) ist.

5. Anomalie-Diagnoseverfahren für ein Additionsventil (26), wobei
das Additionsventil (26) in einem Auslasskanal (20) eines Verbrennungsmotors (10) angeordnet ist und dem Abgas Kraftstoff hinzufügt,
der Motor (10) einen Luftdurchflussmesser (50), der in einem Einlasskanal (12) angeordnet ist und eine Luftmenge (Ga) erfasst, und einen Katalysator (22) umfasst, der in dem Auslasskanal (20) angeordnet ist und eine oxidierende Funktion hat,
das Additionsventil (26) stromaufwärts des Katalysators (22) in dem Abgaskanal (20) angeordnet ist, und
der Motor (10) ferner einen Luft-Kraftstoff-Verhältnissensor (56), der stromabwärts des Additionsventils (26) in dem Auslasskanal (20) angeordnet ist, einen Abgastemperatursensor (52), der stromabwärts des Katalysators (22) in dem Auslasskanal (20) angeordnet ist, und ein Kraftstoffeinspritzventil (18), das Kraftstoff in eine Brennkammer (16) zuführt, umfasst,
wobei das Anomalie-Diagnoseverfahren **dadurch gekennzeichnet ist, dass** es umfasst:
Berechnen eines geschätzten Luft-Kraftstoff-Verhältnisses (Afe), welches ein geschätzter Wert eines Luft-Kraftstoff-Verhältnisses (Af) ist, basierend auf einer von dem Luftdurchflussmesser (50) erfassten Ansaugluftmenge (Ga) und der Summe einer von dem Kraftstoffeinspritzventil (18) eingespritzten Kraftstoffmenge (Q) und einer von dem Additionsventil (26) hinzugefügten Kraftstoffmenge (Ad), und
Bestimmen, dass es eine Geschlossen-festsitzend-Anomalie in dem Additionsventil (26) gibt, wenn eine logische Verknüpfung einer Bedingung, dass ein erfasster Wert (Af) des Luft-Kraftstoff-Verhältnis-Sensors (56) um eine Spanne, die größer oder gleich einem bestimmten Betrag (ΔAf1) ist, größer ist als das geschätzte Luft-Kraftstoff-Verhältnis (Afe), und eine Bedingung, dass ein erfasster Wert (Tex) des Abgastemperatursensors (52) in einem Zeitraum, in dem das Additionsventil (26) Kraftstoff hinzufügt, um eine Spanne, die größer oder gleich einem vorbestimmten Betrag (ΔTe) ist, in diesem Zeitraum kleiner als ein Referenzwert (Texe) ist, zutrifft

6. Nicht-flüchtiges computerlesbares Speichermedium, das ein Programm speichert, das einen Prozessor veranlasst, ein Anomalie-Diagnoseverfahren für ein Additionsventil (26) durchzuführen, wobei
das Additionsventil (26) in einem Auslasskanal (20) eines Verbrennungsmotors (10) angeordnet ist und dem Abgas Kraftstoff hinzufügt,
der Motor (10) einen Luftdurchflussmesser (50), der in einem Einlasskanal (12) angeordnet ist und eine Luftmenge (Ga) erfasst, und einen Katalysator (22) umfasst, der in dem Auslasskanal (20) angeordnet ist und eine oxidierende Funktion hat,
das Additionsventil (26) stromaufwärts des Katalysators (22) in dem Abgaskanal (20) angeordnet ist,
der Motor (10) ferner einen Luft-Kraftstoff-Verhältnissensor (56), der stromabwärts des Additionsventils (26) in dem Auslasskanal (20) angeordnet ist, einen Abgastemperatursensor (52), der stromabwärts des Katalysators (22) in dem Auslasskanal (20) angeordnet ist, und ein Kraftstoffeinspritzventil (18), das Kraftstoff in eine Brennkammer (16) zuführt, umfasst, und
wobei das Anomalie-Diagnoseverfahren **dadurch gekennzeichnet ist, dass** es umfasst
Berechnen eines geschätzten Luft-Kraftstoff-Verhältnisses (Afe), das ein Schätzwert eines Luft-Kraftstoff-Verhältnisses (Af) ist, auf der Grundlage einer von dem Luftdurchflussmesser (50) erfassten Ansaugluftmenge (Ga) und der Summe einer von dem Kraftstoffeinspritzventil (18) eingespritzten Kraftstoffmenge (Q) und einer von dem Additionsventil (26) hinzugefügten Kraftstoffmenge (Ad), und
Bestimmen, dass es eine Geschlossen-festsitzend-Anomalie in dem Additionsventil (26) gibt, wenn eine logische Verknüpfung einer Bedingung, dass ein erfasster Wert (Af) des Luft-Kraftstoff-Verhältnis-Sensors (56) um eine Spanne, die größer oder gleich einem bestimmten Betrag (ΔAf1) ist, größer ist als das geschätzte Luft-Kraftstoff-Verhältnis (Afe), und eine Bedingung, dass ein erfasster Wert (Tex) des Abgastemperatursensors (52) in einem Zeitraum, in dem das Additionsventil (26) Kraftstoff hinzufügt, um eine Spanne, die größer oder gleich einem vorbestimmten Betrag (ΔTe) ist, kleiner als ein Referenzwert (Texe) in diesem Zeitraum ist, zutrifft.

## Revendications

1. Appareil de diagnostic d'anomalie (40) pour une soupape d'addition (26), dans lequel
la soupape d'addition (26) est disposée dans un passage d'échappement (20) d'un moteur à combustion interne (10) et est configurée pour ajouter du carburant au gaz d'échappement,
le moteur (10) comprend un débitmètre d'air (50), qui est disposé dans un passage d'admission (12) et configuré pour détecter une quantité d'air (Ga), et
un catalyseur (22), qui est disposé dans le passage d'échappement (20) et a une fonction d'oxydation,
la soupape d'addition (26) étant disposée en amont du catalyseur (22) dans le passage d'échappement (20),
le moteur (10) comprenant également un capteur de rapport air-carburant (56), qui est disposé en aval de la soupape d'addition (26) dans le passage d'échappement (20), un capteur de température d'échappement (52), qui est disposé en aval du catalyseur (22) dans le passage d'échappement (20), et une soupape d'injection de carburant (18), qui est configurée pour délivrer du carburant dans une chambre de combustion (16), et
l'appareil de diagnostic d'anomalie (40) comprenant des moyens de traitement configurés pour exécuter :
un traitement d'estimation de rapport air-carburant destiné à calculer un rapport air-carburant estimé (Afe), qui est une valeur estimée d'un rapport air-carburant (Af) sur la base d'une quantité d'air d'admission (Ga) détectée par le débitmètre d'air (50) et de la somme d'une quantité de carburant (Q) injectée par la soupape d'injection de carburant (18) et d'une quantité de carburant (Ad) ajoutée par la soupape d'addition (26) ; et **caractérisé par**
un traitement de détermination d'anomalie fermée-collée destiné à déterminer qu'il y a une anomalie fermée-collée dans la soupape d'addition (26) si une conjonction logique comprenant une condition qu'une valeur détectée (Af) du capteur de rapport air-carburant (56) est plus grande que le rapport air-carburant estimé (Afe) d'une marge supérieure ou égale à une quantité spécifiée (ΔAf1) et une condition qu'une valeur détectée (Tex) du capteur de température d'échappement (52) dans une période au cours de laquelle la soupape d'addition (26) ajoute du carburant est plus petite qu'une valeur de référence (Texe) dans cette période d'une marge supérieure ou égale à une quantité prédéterminée (ΔTe), est vraie.

2. Appareil de diagnostic d'anomalie (40) pour une soupape d'addition (26) selon la revendication 1, **caractérisé en ce que** le traitement de détermination d'anomalie fermée-collée est un processus destiné à déterminer qu'il y a une anomalie fermée-collée si la conjonction logique demeure vraie de manière continue pendant une période prédéterminée (C1th).

3. Appareil de diagnostic d'anomalie (40) pour une soupape d'addition (26) selon la revendication 1 ou 2, dans lequel les moyens de traitement sont configurés pour
exécuter en outre un traitement d'estimation de température d'échappement destiné à calculer une température d'échappement estimée (Texe), qui est une valeur estimée de la température d'échappement en aval du catalyseur (22), sur la base d'un point de fonctionnement du moteur (10) et d'une quantité d'addition (Ad) de carburant ajoutée par la soupape d'addition (26), et
utiliser la température d'échappement estimée (Texe) comme valeur de référence (Texe).

4. Appareil de diagnostic d'anomalie (40) pour une soupape d'addition (26) selon la revendication 3, dans lequel les moyens de traitement sont configurés pour exécuter le traitement de détermination d'anomalie fermée-collée si une quantité de changement (ΔAf) du rapport air-carburant (Af) est inférieure ou égale à une quantité prédéterminée (Δth).

5. Procédé de diagnostic d'anomalie pour une soupape d'addition (26), selon lequel
la soupape d'addition (26) est disposée dans un passage d'échappement (20) d'un moteur à combustion interne (10) et ajoute du carburant au gaz d'échappement,
le moteur (10) comprend un débitmètre d'air (50), qui est disposé dans un passage d'admission (12) et détecte une quantité d'air (Ga), et un catalyseur (22), qui est disposé dans le passage d'échappement (20) et a une fonction d'oxydation,
la soupape d'addition (26) est disposée en amont du catalyseur (22) dans le passage d'échappement (20), et
le moteur (10) comprend également un capteur de rapport air-carburant (56), qui est disposé en aval de la soupape d'addition (26) dans le passage d'échappement (20), un capteur de température d'échappement (52), qui est disposé en aval du catalyseur (22) dans le passage d'échappement (20), et une soupape d'injection de carburant (18), qui délivre du carburant dans une chambre de combustion (16),
le procédé de diagnostic d'anomalie étant **caractérisé en ce qu'**il comprend le fait de :
calculer un rapport air-carburant estimé (Afe), qui est une valeur estimée d'un rapport air-carburant (Af) sur la base d'une quantité d'air d'admission (Ga) détectée par le débitmètre d'air (50) et de la somme d'une quantité de carburant (Q) injectée par la soupape d'injection de carburant (18) et d'une quantité de carburant (Ad) ajoutée par la soupape d'addition (26) ; et
déterminer qu'il y a une anomalie fermée-collée dans la soupape d'addition (26) si une conjonction logique comprenant une condition qu'une valeur détectée (Af) du capteur de rapport air-carburant (56) est plus grande que le rapport air-carburant estimé (Afe) d'une marge supérieure ou égale à une quantité spécifiée (ΔAf1) et une condition qu'une valeur détectée (Tex) du capteur de température d'échappement (52) dans une période au cours de laquelle la soupape d'addition (26) ajoute du carburant est plus petite qu'une valeur de référence (Texe) dans cette période d'une marge supérieure ou égale à une quantité prédéterminée (ΔTe), est vraie.

6. Support de mémoire non-transitoire lisible par machine qui stocke un programme qui amène un processeur à réaliser un processus de diagnostic d'anomalie pour une soupape d'addition (26), dans lequel
la soupape d'addition (26) est disposée dans un passage d'échappement (20) d'un moteur à combustion interne (10) et ajoute du carburant au gaz d'échappement,
le moteur (10) comprend un débitmètre d'air (50), qui est disposé dans un passage d'admission (12) et détecte une quantité d'air (Ga), et un catalyseur (22), qui est disposé dans le passage d'échappement (20) et a une fonction d'oxydation,
la soupape d'addition (26) est disposée en amont du catalyseur (22) dans le passage d'échappement (20),
le moteur (10) comprend également un capteur de rapport air-carburant (56), qui est disposé en aval de la soupape d'addition (26) dans le passage d'échappement (20), un capteur de température d'échappement (52), qui est disposé en aval du catalyseur (22) dans le passage d'échappement (20), et une soupape d'injection de carburant (18), qui délivre du carburant dans une chambre de combustion (16), et
le processus de diagnostic d'anomalie étant **caractérisé en ce qu'**il comprend le fait de :
calculer un rapport air-carburant estimé (Afe), qui est une valeur estimée d'un rapport air-carburant (Af) sur la base d'une quantité d'air d'admission (Ga) détectée par le débitmètre d'air (50) et de la somme d'une quantité de carburant (Q) injectée par la soupape d'injection de carburant (18) et d'une quantité de carburant (Ad) ajoutée par la soupape d'addition (26) ; et
déterminer qu'il y a une anomalie fermée-collée dans la soupape d'addition (26) si une conjonction logique comprenant une condition qu'une valeur détectée (Af) du capteur de rapport air-carburant (56) est plus grande que le rapport air-carburant estimé (Afe) d'une marge supérieure ou égale à une quantité spécifiée (ΔAf1) et une condition qu'une valeur détectée (Tex) du capteur de température d'échappement (52) dans une période au cours de laquelle la soupape d'addition (26) ajoute du carburant est plus petite qu'une valeur de référence (Texe) dans cette période d'une marge supérieure ou égale à une quantité prédéterminée (ΔTe), est vraie.
